Europäisches Patentamt

European Patent Office

Office européen des brevets

(19)

(11) Numéro de publication : **0 082 748**
**B1**

(12) # FASCICULE DE BREVET EUROPÉEN

(45) Date de publication du fascicule du brevet :
**10.09.86**

(21) Numéro de dépôt : **82402230.5**

(22) Date de dépôt : **06.12.82**

(51) Int. Cl.⁴ : **B 24 B 7/16**

(54) Machine de rectification plane frontale notamment pour rectifier les extrémités de fibres optiques.

(30) Priorité : **18.12.81 FR 8123721**

(43) Date de publication de la demande :
**29.06.83 Bulletin 83/26**

(45) Mention de la délivrance du brevet :
**10.09.86 Bulletin 86/37**

(84) Etats contractants désignés :
**BE CH DE GB IT LI NL SE**

(56) Documents cités :
**DE-B- 1 170 277**
**DE-C- 565 025**
**GB-A- 505 891**
**US-A- 1 640 715**
**US-A- 2 424 448**
**US-A- 3 299 579**

(73) Titulaire : **L'Etat Français, représenté par le Ministre des P.T.T. (Centre National d'Etudes des Télécommunications)**
**38-40 rue du Général Leclerc**
**F-92131 Issy-Les-Moulineaux (FR)**

**SOCIETE ANONYME DE TELECOMMUNICATIONS**
**41, rue Cantagrel**
**F-75624 Paris Cedex 13 (FR)**

**SOCIETE INDUSTRIELLE DE LIAISONS ELECTRIQUES - SILEC**
**64bis, rue de Monceau**
**F-75008 Paris (FR)**

(72) Inventeur : **Delebecque, Robert Paul**
**156 bis, rue d'Aulnay**
**F-92290 Chatenay Malabry (FR)**
Inventeur : **Le Marer, René**
**Kerougan Bras**
**F-22730 Tregastel (FR)**

(74) Mandataire : **Martinet & Lapoux**
**62, rue des Mathurins**
**F-75008 Paris (FR)**

## Description

La présente invention concerne une machine de rectification plane frontale comprenant une meule, une broche porte-meule déplaçable parallèlement à son axe, des moyens pour entraîner en rotation la broche, un porte-pièce et des moyens pour entraîner en rotation le porte-pièce autour d'un axe parallèle à celui de la broche porte-meule et dans un secteur circulaire aux extrémités duquel des pièces à rectifier supportées par le porte-pièce sont respectivement devant et par côté de la face frontale travaillante de la meule.

L'invention a trait plus particulièrement à une telle machine de rectification pour rectifier les faces de très petites pièces, et notamment de deux pièces à abouter, telles que les faces aux extrémités de fibres optiques montées sur des supports de raccordement pour deux câbles multifibres.

Pour abouter des fibres optiques entre elles, on connaît plusieurs procédés parmi lesquels on peut citer les suivants :

1) soudure des fibres bout à bout par fusion partielle des extrémités, combinée avec un rapprochement des fibres ;

2) coupe des fibres au moyen d'une très faible amorce de rupture effectuée sur la fibre, suivie d'un effort de traction ; ce procédé donne une qualité de surface suffisante pour obtenir une qualité de raccordement satisfaisante par placement des fibres à raccorder bout à bout et interposition d'un agent adaptateur d'indice ;

3) coupe des fibres sans précaution particulière, fixation dans un support, généralement par collage, et polissage manuel des faces constituant le plan de jonction des fibres.

Les deux premiers procédés sont utilisables généralement lorsque les fibres doivent être raccordées une à une.

Le troisième procédé se rapporte plus particulièrement à l'objet de l'invention. Lorsque plusieurs fibres doivent être raccordées, telles que celles nombreuses de deux câbles multifibres, il est avantageux, notamment en vue de réduire les manipulations individuelles pour chaque couple de fibres et par suite la durée du raccordement, de traiter toutes les fibres en même temps. Cette simultanéité de traitement des fibres est réalisée aussi bien pour les opérations de dégainage, positionnement ou collage, que pour l'opération qui consiste à dresser simultanément toutes les faces extrêmes des fibres de façon à les situer toutes sur un même plan.

Pour réaliser ce dressage, il est nécessaire de recourir à une machine de rectification utilisable dans de bonnes conditions, en particulier pour les raccordements de câbles à fibres optiques sur chantier. L'expérience a montré qu'il n'est pas nécessaire de procéder à un polissage des faces des fibres optiques en regard. Il suffit d'effectuer une passe fine de rectification tout en s'efforçant d'obtenir une très bonne définition géométrique.

Des machines de rectification plane frontale telles que définies dans le préambule de la revendication 1 sont décrites dans les documents de brevet US-A-3 299 579 et GB-A-441 022.

Selon le brevet américain US-A-3 299 579, le porte-pièce est un bras tournant comprenant une cavité de guidage d'une pièce. Les moyens d'entraînement à rotation alternative du porte-pièce sont du genre bielle-manivelle. Deux meules circulaires superposées et coaxiales sont prévues pour rectifier simultanément les deux faces d'une pièce. Chaque broche porte-meule avec son moteur d'entraînement en rotation est coulissable manuellement le long de colonnes verticales, parallèlement à son axe, au moyen d'un volant afin d'ajuster l'écartement entre les faces travaillantes des meules. Chaque meule est composée de trois portions abrasives concentriques ayant des grades ou dureté différentes afin que la pièce lors de son passage entre les meules de leur périphérie vers leur centre soit d'abord ébarbée puis rectifiée de plus en plus finement. A chaque cycle de rectification, la cavité du porte-pièce reçoit la pièce inférieure d'une pile de telles pièces dans une colonne lorsque le porte-pièce est par côté des meules, puis le porte-pièce tourne vers le centre des meules en vue de rectifier progressivement les deux faces de la pièce et enfin la pièce rectifiée tombe dans une colonne coaxiale à la broche portant la meule inférieure vers un convoyeur. Au cours de la rectification, la pièce n'est pas véritablement portée par le bras porte-pièce mais entraînée par celui-ci et guidée pendant cette rotation par un guide puis par les faces en vis-à-vis des meules. La pièce peut même tourner sur elle-même lorsqu'elle est rectifiée par des portions abrasives périphériques et intermédiaires. Suivant l'autre sens de rotation, le porte-pièce tourne du centre des meules vers la colonne d'amenée des pièces, sans « porter » de pièces.

Selon le brevet britannique GB-A-441 022, le porte-pièce est également entraîné en rotation alternative entre la périphérie et le centre de deux meules coaxiales et superposées par un système à bielle, manivelle et came à excentrique. Le porte-pièce est un étau pour enserrer une ou plusieurs pièces telles que des briques. Ici, les pièces sont rectifiées pendant les deux rotations en sens inverse du porte-pièce. La passe de retour, du centre vers le côté des meules, raye les pièces, ce qui est ici sans dommage puisque les pièces sont des briques. Par contre, si les pièces sont fragiles, telles que des fibres optiques, le rayage des faces aux extrémités des fibres confèrent une jonction entre fibres aboutées ayant une perte par insertion considérable pour la transmission de signaux optiques.

Le procédé de rectification selon le brevet US-A-3 299 579 remédie en partie à cet inconvénient puisque les pièces ne sont rectifiées que lors de la première rotation, du côté vers le centre des meules. Cependant, un tel procédé ne peut être

mis en œuvre pour rectifier des extrémités de fibres optiques fixées sur un support. D'une part, de tels supports multifibres ne sont pas empilables et ne peuvent pas tomber par gravité au centre des meules, les fibres étant celles d'un câble encombrant et difficilement maniable contrairement à de petites pièces individuelles. D'autre part, le support multifibre doit être fixé fermement au porte-pièce afin d'obtenir des faces de dressage de fibres optiques qui sont rigoureusement coplanaires et rectifiées avec une très grande précision. Si ce n'était pas le cas, ceci conduirait à un mésalignement et à un non-parallélisme des faces des fibres optiques à abouter.

Le principal but de la présente invention est de remédier aux inconvénients précédents. En d'autres termes, les pièces doivent être rectifiées pendant la rotation du porte-pièce, du côté vers le centre de la meule, et ne doivent plus être au contact de la meule pendant la rotation du porte-pièce en sens inverse afin d'éviter tout rayage des pièces rectifiées. Un tel rayage doit être notamment évité lorsque la face frontale travaillante de la meule comporte des plaques circulaires concentriques ayant des structures et/ou grades différents.

A cette fin, une machine de rectification plane frontale est caractérisée selon la revendication 1. Ainsi, la rotation du porte-pièce vers la face frontale de la meule constitue l'unique passe de rectification des pièces, et le retour du porte-pièce par côté de la meule, sans aucun contact des pièces rectifiées avec la meule, permet le retrait des pièces rectifiées.

Selon un autre aspect de l'invention, une telle rotation alternative de porte-pièce permet de prévoir au moins un second porte-pièce qui est entraîné par des moyens de rotation alternative analogues à ceux du premier porte-pièce. De préférence, les deux portes-pièces sont diamétralement opposées par rapport au centre de la meule ou, en général, disposés symétriquement par rapport à la meule, et sont animés suivant des mouvements de rotation opposés. Ceci permet de rectifier simultanément les chants de deux supports multifibres et les faces des extrémités des fibres optiques fixées sur les supports, et ainsi d'obtenir des faces rigoureusement coplanaires.

Selon un autre aspect de l'invention, la durée de l'opération de rectification est encore réduite par le fait que la vitesse de rotation du porte-pièce suivant le sens de rotation du côté vers le devant de la face frontale travaillante de la meule, pour lequel les pièces sont rectifiées par la meule, est plus petite que celle du porte-pièce suivant le sens de rotation opposé du devant vers le côté de la face frontale travaillante de la meule pour lequel les pièces rectifiées ne sont pas au contact de la meule.

De préférence, les moyens d'entraînement des organes rotatifs et coulissants inclus dans le bâti de la machine sont des moteurs pneumatiques afin d'assurer une grande sécurité pour le personnel utilisant la machine. Selon une autre variante, lorsque certains moyens d'entraînement sont des moteurs électriques, l'invention prévoit des moyens de circulation à air forcé dans le bâti de la machine afin de refroidir les moteurs électriques mais également de supprimer toute introduction d'eau par des joints étanches entourant les organes tournants émergeant du bâti. L'eau sous pression est pulvérisée par un dispositif auxiliaire pour refroidir la face frontale travaillante de la meule et les pièces en cours de rectification.

Lorsque la machine de rectification plane frontale conforme à l'invention est destinée à rectifier des extrémités de fibres optiques affleurant un chant transversal d'un support multifibre en vue du raccordement de câbles à fibres optiques, sur chaque porte-pièce est fixé un étau dont les prises des mors peuvent être semi-cylindriques et propres à emprisonner deux rainures longitudinales parallèles pratiquées dans le support, lesdites rainures servant à recevoir des cylindres pour aligner deux supports multifibres identiques et abouter leurs fibres. Cependant, d'une manière générale, l'étau et les prises de ses mors sont adaptés à la forme du support ou pièce à rectifier. L'étau est muni de moyens de limitation de l'effort de serrage, tels qu'un ressort, afin de ne pas endommager les supports de fibres en matière relativement fragile.

D'autres avantages de la présente invention apparaîtront plus clairement à la lecture de la description suivante de plusieurs modes de réalisation de la machine de rectification plane frontale, en référence aux dessins annexés, dans lesquels :

les Figures 1 et 2 sont des vues longitudinales de côté montrant schématiquement les organes de la machine selon un mode de réalisation préférée, à travers une coupe du bâti suivant la ligne brisée I-I de la Fig. 3, respectivement avec un moteur électrique et un moteur pneumatique pour la rotation de la broche porte-meule ;

la Figure 3 est une vue de face frontale schématique du bâti de la machine à deux porte-pièces ;

la Figure 4 est une vue de dessus schématique des moyens d'entraînement alternatif des porte-pièces ;

la Figure 5 est une vue partielle en coupe suivant la ligne V-V de la Fig. 3 montrant les moyens de réglage de la profondeur de passe ;

la Figure 6 est une vue en coupe axiale schématique d'un dispositif de raccordement de deux câbles à fibres optiques donné à titre d'exemple ;

la Figure 7 est une vue du chant de sciage à rectifier d'un support multifibre muni de cylindres d'alignement ;

la Figure 8 est une vue de face partiellement en coupe de l'extrémité d'un porte-pièce supportant un étau pour enserrer un support multifibre ; et

les Figures 9A à 9C montrent différents profils de meules.

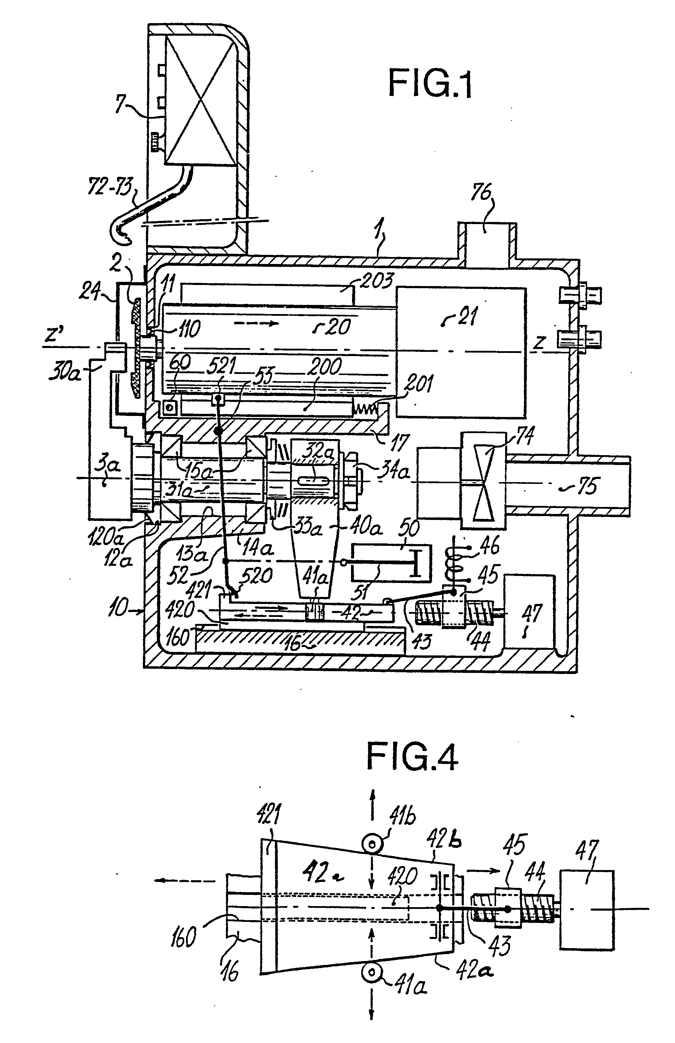

La machine de rectification plane frontale telle que montrée à la Fig. 1 comprend devant la face frontale 10 de son bâti 1, une meule cylindrique 2 et deux porte-pièces oscillants 3a et 3b.

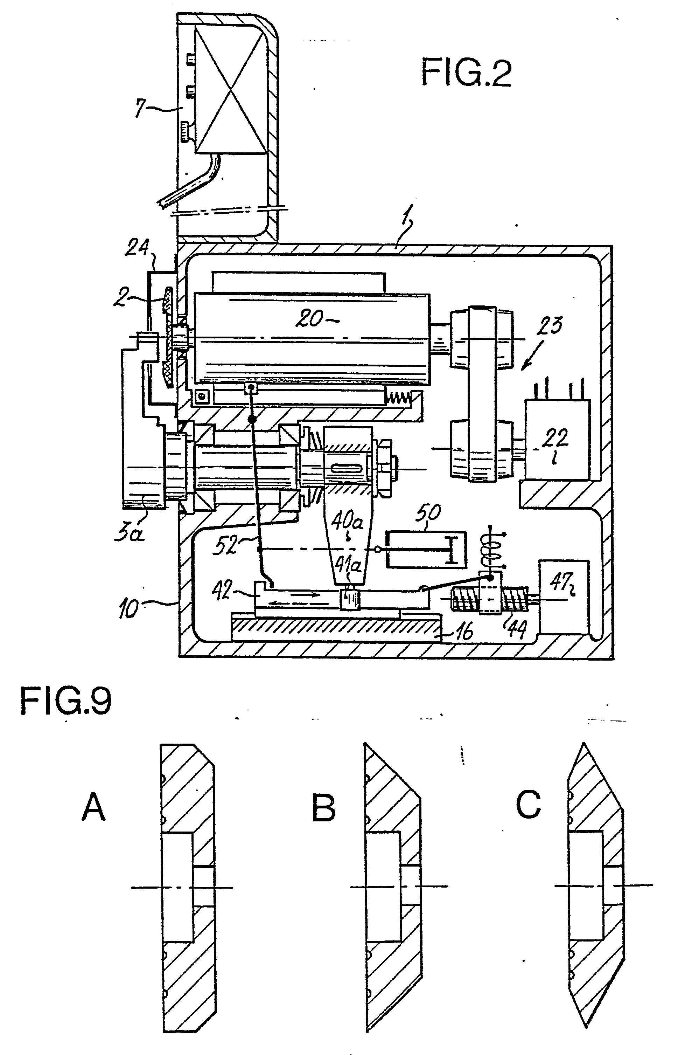

La meule 2 est bridée d'une manière connue à l'extrémité frontale externe d'une broche 20 qui est montée tournante dans un alésage 11 de la face frontale 10 du bâti à travers des moyens annulaires d'étanchéité 110, tels que joints toriques ou manchette souple en cuir ou en caoutchouc ou analogues. La broche porte-meule 20 s'étend dans la partie interne supérieure du bâti 1 le long d'un axe longitudinal horizontal Z'Z et a son autre extrémité entraînée en rotation par des moyens moteurs fixés au bâti 1. Les moyens moteurs peuvent être un moteur électrique, représenté dans son ensemble par le bloc 21 dans la Fig. 1, ou bien un moteur à air comprimé 22 associé à un système d'entraînement à poulies et courroie 23 comme montré à la Fig. 2.

La meule 2 est enfermée dans un capot protecteur 24 qui est fixé sur la face frontale 10 du bâti et dans lequel sont pratiquées deux lumières en secteur d'arc pour le libre passage des extrémités oscillantes 30a, 30b supérieures des deux porte-pièces 3a, 3b qui sont destinées à supporter les pièces à rectifier. Comme montré aux Fig. 1 à 3, les porte-pièces 3a, 3b sont fixés aux extrémités externes de deux arbres longitudinaux 31a, 31b qui traversent deux alésages 12a, 12b de la face frontale 10 du bâti à travers des manchettes d'étanchéité 120a, 120b ou analogues. Les axes de rotation des arbres 31a, 31b sont symétriques par rapport à l'axe diamétral vertical Y'Y de la meule 2 à une distance de celui-ci sensiblement égale au rayon moyen de la surface frontale travaillante de la meule 2. La distance entre le plan horizontal contenant les axes des arbres 31a, 31b et l'axe diamétral horizontal X'X de la meule 2 détermine la longueur des porte-pièces ou leviers oscillants 3a, 3b afin que les pièces à rectifier fixées aux extrémités 30a, 30b soient sensiblement dans le plan horizontal ayant pour trace l'axe X'X.

Les alésages étanches 12a et 12b sont prolongés longitudinalement à l'intérieur du bâti par deux alésages composites 13a, 13b pratiqués dans deux bossages 14a, 14b internes au bâti 1. Deux jeux de roulements à rouleaux 15a, 15b par exemple coniques à inclinaisons symétriques sont encastrés dans les alésages 13a, 13b et forment des paliers pour les arbres 31a, 31b. Chaque extrémité interne d'un arbre 31a, 31b est solidaire par clavetage transversal ou analogue, indiqué en 32a, 32b, de la première extrémité supérieure d'un organe longiligne sensiblement vertical 40a, 40b. Chaque couple composé d'un arbre 31a, 31b et d'un organe 40a, 40b est maintenu stationnaire en translation longitudinale au moyen de deux butées supportées par l'arbre. L'une de ces butées 33a, 33b comprend un empilage de rondelles élastiques à rattrapage de jeu et est disposée contre l'un des roulements 15a, 15b tandis que contre l'autre roulement est appliqué un épaulement avant de l'arbre. L'autre butée 34a, 34b est disposée à l'extrémité interne de l'arbre 31a, 31b contre l'extrémité supérieure arrière de l'organe 40a, 40b et est une butée de verrouillage à bague d'arrêt et écrou.

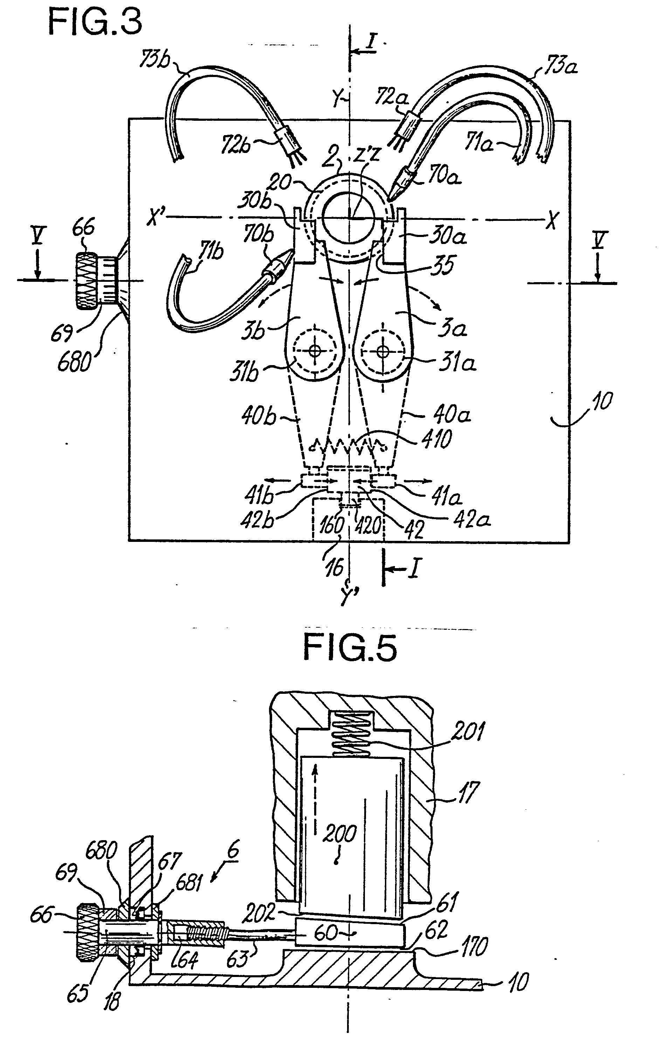

En référence aux Figs 3 et 4, un galet 41a, 41b est monté à rotation sensiblement verticale à la seconde extrémité inférieure de l'organe 40a, 40b. Les galets 41a et 41b peuvent rouler contre deux rampes respectives 42a, 42b qui forment les côtés inclinés d'un coulisseau longitudinal central 42 qui a un profil horizontal en trapèze isocèle. Les côtés inclinés 42a et 42b forment un angle aigu par rapport à la direction longitudinale Z'Z et donc par rapport aux axes des arbres tournants 31a et 31b. Les extrémités d'un ressort hélicoïdal 410 sont fixées entre les premières et secondes extrémités des organes 40a et 40b. Le ressort 410 attire les galets 41a et 41b contre les côtés inclinés respectifs 42a, 42b. Le coulisseau 42 possède une languette sous-jacente 420 qui coulisse dans la rainure longitudinale 160 d'une glissière 16 qui est fixée sur la face interne du fond du bâti 1. L'axe de coulissement du coulisseau 42 est horizontal et dans le plan vertical diamétral Y'Y-Z'Z de la meule 2. Les rampes verticales 42a et 42b sont symétriques par rapport à l'axe de coulissement et divergent en direction de la face frontale du bâti. Lorsque le coulisseau 42 s'éloigne progressivement de la face frontale 10, les galets 41a et 41b roulent sur les rampes verticales 42a et 42b et s'écartent de l'axe de coulissement. Il en résulte que les extrémités 30a et 30b des porte-pièces supportant les pièces à rectifier se rapprochent de l'axe de rotation Z'Z de la meule 2 et décrivent deux arcs de cercle qui sont diamétralement et respectivement opposés à ceux décrits par les organes 40a et 40b s'éloignant.

Les moyens pour entraîner en translation lente vers l'arrière le coulisseau 42 comprennent, selon la réalisation illustrée aux Fig. 1 et 4, une bielle 43, un système à vis sans fin 44 et écrou 45, un moyen 46 pour entraîner l'écrou 45 en translation perpendiculaire à la vis sans fin 44, et un moteur 47. Les deux extrémités de la bielle 43 sont montées tournantes à l'extrémité arrière du coulisseau 42 et sur l'écrou 45, respectivement. Le moyen de débrayage 46 comprend un électro-aimant, comme montré à la Fig. 1, ou un vérin, qui permet de remonter l'écrou 45 ou de l'engrener sur la vis sans fin 44. Le moteur 47 peut être un moteur électrique qui est fixé sur la face interne du fond du bâti 1 et qui peut entraîner suivant les deux sens de rotation la vis sans fin 44 autour de son axe longitudinal. Le moteur 47 peut être également un moteur pneumatique.

Le recul progressif du coulisseau 42 vers l'arrière est réalisé par l'embrayage de l'écrou 45 avec la vis sans fin 44, ce qui permet une rectification relativement lente des pièces par la face frontale de la meule 2, comparativement au retour rapide des pièces rectifiées, comme on le verra ci-dessous. Le réglage des vitesses des porte-pièces 3a, 3b selon les deux directions de rotation peut être contrôlé par la variation de la vitesse du moteur 47.

Après la passe de rectification, des moyens moteurs sont excités pour entraîner en translation rapide la meule 2 parallèlement à son axe Z'Z et vers l'arrière et pour simultanément entraîner en translation rapide vers l'avant le coulisseau 42 et ainsi éloigner la meule rapidement des extrémités 30a, 30b des porte-pièces supportant les pièces rectifiées devant le recul de la meule. Ces moyens moteurs de translation sont montrés à la Fig. 1 et comprennent un vérin pneumatique 50 dont la tige 51 est fixée à rotation sur le bras inférieur d'un levier 52. Le point d'articulaton 53 du levier 52 est monté à rotation autour d'un axe parallèle à l'axe X'X et solidaire du bâti entre la broche 20 et le coulisseau 42 au-dessus des bossages internes 14a et 14b ; le bras supérieur du levier est plus court que son bras inférieur et, par suite, la course de recul de la meule 2 est plus faible comparativement à l'avance du coulisseau 42 et au déplacement des extrémités 30a, 30b vers leurs positions initiales. Le levier 52 peut osciller dans le plan vertical diamétral Y'Y — Z'Z de la meule 2, entre les deux bossages internes 14a et 14b. L'extrémité 520 du bras inférieur du levier 52 est destinée à pousser une butée saillante avant supérieure 421 du coulisseau 42 vers la face frontale 10. L'extrémité du bras supérieur du levier 52 est ancrée à rotation en 521 à une languette sous-jacente 200 de la broche porte-meule 20 qui coulisse dans une glissière longitudinale 17 pratiquée à l'intérieur du bâti, au dessus des bossages 14a et 14b. La languette 200 est en fait une partie du boîtier formant palier de la broche. Elle est poussée contre l'extrémité avant de la glissière 17 par un ressort de compression 201.

Lorsque le vérin 50 est actionné pour avancer la tige de piston 51 vers la face frontale 10, le coulisseau 42 a reculé, les pièces sont rectifiées et l'écrou 45 est dégagé de la vis sans fin 44 par l'électro-aimant 46. Puis la broche porte-meule 20 coulisse le long de l'axe Z'Z sur une faible course de recul, à l'encontre du ressort 201, afin de dégager rapidement la meule 2 des courses circulaires de retour des extrémités 30a, 30b des porte-pièce 3a, 3b supportant les pièces rectifiées, et simultanément, le bras inférieur 520 du levier 52 pousse rapidement la butée 421 afin que des galets 41a et 41b se rapprochent et que les extrémités 30a et 30b des porte-pièces s'éloignent rapidement pour revenir à leurs positions initiales où les pièces rectifiées sont enlevées.

En référence à la Fig. 5, la machine de rectification comprend des moyens 6 pour régler la position de la face frontale de la meule 2 par rapport aux surfaces verticales des pièces à rectifier, c'est-à-dire par rapport aux extrémités 30a, 30b des porte-pièces 3a, 3b. Ces moyens de réglage de la profondeur de passe de rectification 6 comprennent une cale 60 ayant une section horizontale en trapèze rectangle dont le grand côté 61 est faiblement incliné par rapport à l'axe X'X et reçoit en butée sous l'action du ressort arrière 201 la face avant verticale à même inclinaison 202 de la languette 200 qui coulisse dans la glissière supérieure 17. L'autre grand côté 62 de la cale 60 est perpendiculaire à l'axe Z'Z et

coulisse contre la paroi verticale avant 170 de la glissière 17. Une extrémité de la cale 60 est prolongée par une tige filetée 63 qui est vissée dans le trou taraudé borgne 64 à l'extrémité d'un écrou 65. La tête moletée 66 de l'écrou 65 est accessible sur une paroi longitudinale externe du bâti 1, comme montré à la Fig. 3. La tige lisse de l'écrou 65 entre la tête 66 et le trou borgne 64 traverse un orifice 18 de la paroi précitée du bâti 1 à travers un joint annulaire 67 et y est stationnaire axialement par une entretoise classique au moyen de bagues d'arrêt 680, 681. La bague d'arrêt externe 680 comporte un index de référence. Un vernier à échelle circulaire 69 est solidaire de l'écrou 65 et sous-jacent à la tête 66. La rotation de la tête 66 et du vernier 69 se traduit par la translation de la cale 60 et, par suite, du réglage de la position avant de la languette 200 qui est en butée contre le grand côté incliné 61 de la cale 60 pendant toute la passe de rectification. Ainsi la rotation du vernier 69 par rapport à l'index de référence indique la profondeur de passe de la meule 2. Les moyens de réglage 6 assurent une grande finesse de réglage de la profondeur de passe. Ici encore, aucun coulissement d'organes n'est prévu à l'extérieur de la machine et l'étanchéité est réalisée sur une partie cylindrique telle que la tige lisse de l'écrou 65.

Comme montré aux Fig. 1 et 2, le bâti 1 peut être surmonté d'un pupitre de commande 7 dans lequel sont logés tous les boutons et manettes commandant les moyens d'entraînement tels que 21 ou 22 ; 46, 47 et 50. Ces moyens d'entraînement peuvent être actionnés individuellement ou automatiquement à travers des moyens de transmission électro-mécaniques (non représentés) afin d'effectuer une opération de rectification des pièces consistant

— après la fixation des pièces à rectifier aux extrémités 30a, 30b des porte-pièces 3a, 3b et le réglage de la profondeur de passe par les moyens de réglage 6 ;

— en le recul du coulisseau 42 par embrayage de l'écrou 45 avec la vis sans fin tournante 44 et simultanément en les pivotements des extrémités 30a et 30b l'une vers l'autre devant la face frontale de la meule tournante 2 pour la rectification des pièces, comme indiqué par les flèches en traits pleins dans les dessins ;

— puis, après débrayage de l'écrou 45 de la vis sans fin 44 et actionnement du vérin 50, en le retrait vers l'arrière de la broche 20 et de la meule tournante 2 et simultanément en l'avance du coulisseau 42 pour éloigner les extrémités 30a et 30b et donc les pièces rectifiées jusqu'à leurs positions initiales où les pièces sont ôtées des porte-pièces 3a, 3b, comme indiqué par les flèches en traits interrompus dans les dessins.

Comme montré aux Fig. 1 à 3, des moyens auxiliaires peuvent être prévus pour améliorer l'opération de rectification et sont accessibles par le pupitre de commande 7.

Deux buses 70a et 70b sont supportées par des étriers fixés sur la face frontale 10 du bâti et sur le capot de protection 24 et sont pointées symétriquement vers la surface frontale travaillante de la meule 2 au niveau de l'axe transversal X'X. Les buses 70a et 70b sont reliées par des tuyaux flexibles 71a et 71b à un dispositif d'arrosage en eau sous pression d'air qui la pulvérise lors de la passe de rectification.

Deux petits spots lumineux 72a et 72b sont alimentés à travers des cordons conducteurs flexibles 73a et 73b par un générateur basse tension. Les deux spots 72a et 72b sont fixés par des étriers sur la face externe du capot 24 et éclairent les deux endroits de travail diamétralement opposés sur la meule 2.

Notamment dans le cas où des moyens d'entraînement comportent des moteurs électriques, une circulation d'air forcé peut être obtenue à l'intérieur du bâti 1 au moyen d'un ventilateur 74 qui est inséré dans une conduite d'aspiration d'air 75 traversant la face arrière du bâti, et d'une conduite d'échappement d'air 76 traversant la paroi supérieure du bâti 1. Le ventilateur 74 refroidit les moteurs électriques et crée une surpression à l'intérieur du bâti 1 qui élimine tout risque d'introduction d'eau par les buses 70a et 70b au cas où les joints tels que 110, 120a et 120b ne seraient pas complètement étanches.

On notera que d'autres modes de réalisation peuvent être déduits par l'homme du métier à partir de la description ci-dessus relative à une réalisation préférée de la machine de rectification selon l'invention.

Ainsi, au lieu que les côtés inclinés 42a et 42b du coulisseau 42 ou rampes de roulement des galets 41a et 41b soient convergentes vers l'arrière de la machine, ceux-ci peuvent être convergents vers la face frontale 10 du bâti ; dans ce cas, le coulisseau 42 avance vers la face frontale 10 pour la rectification et recule vers l'arrière du bâti pour dégager les pièces rectifiées de la face frontale de la meule ; le levier 52 pousse vers l'arrière du bâti le coulisseau 42 et la broche porte-meule 20 et son axe de pivotement 53 est au-dessus des endroits de poussée 521 et 520.

Selon un autre mode de réalisation, relativement à chaque arbre de rotation 31, le porte-pièce 3 et l'organe 40 respectifs peuvent ne pas être diamétralement opposés ; par exemple, l'organe 40 peut osciller au-dessus de l'arbre 31 et latéralement à la broche 20, tandis que le coulisseau 42 coulisse dans une glissière au-dessus de la broche 20.

Enfin selon encore un autre mode de réalisation, la fonction du coulisseau 42 peut être obtenue au moyen d'une came rotative entraînée par un motoréducteur et un moyeu à roue libre.

On notera également que le bâti de la machine forme un bloc parallélépipédique relativement petit et léger, et facilement portable.

Des caractéristiques additionnelles apportées à la machine de rectification selon l'invention en vue de rectifier les extrémités des fibres optiques de câbles multifibres en vue de leur raccordement est maintenant décrite.

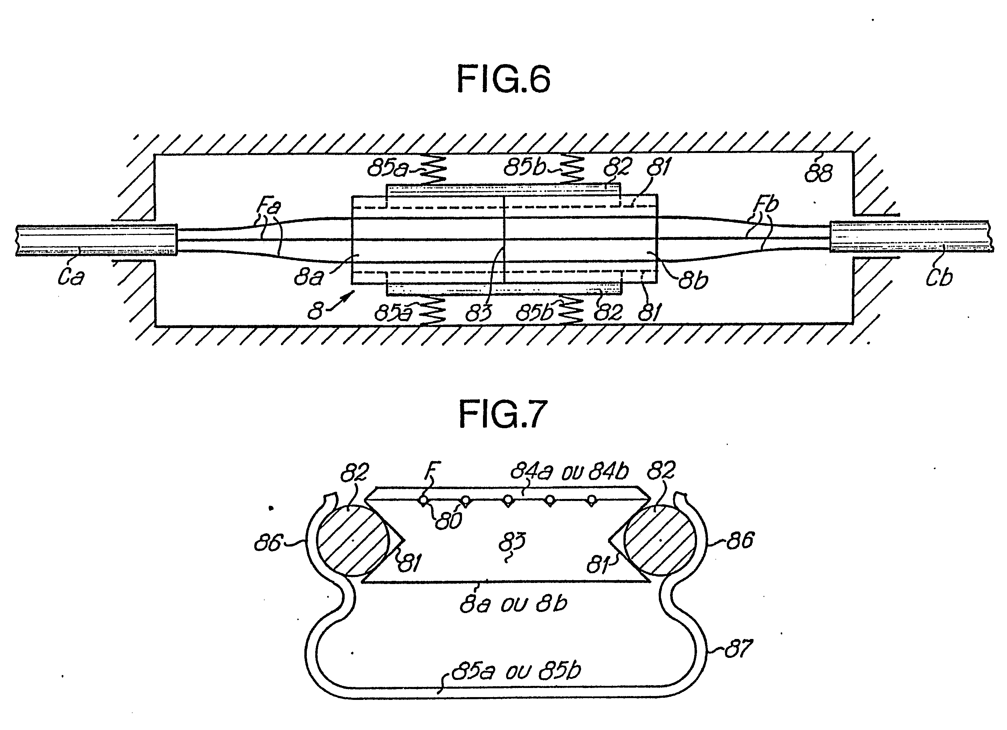

En référence aux Fig. 6 et 7, il est supposé que les extrémités des fibres Fa et Fb de deux câbles multifibres Ca et Cb à structure à symétrie axiale sont raccordés deux à deux sur un support plan 8. Les joncs ou âmes rainurées des câbles sur lesquels sont équiréparties circulairement les fibres, ont été sciés après dégainage des câbles et épanouissement des fibres optiques.

Le support 8 est un substrat parallélépipédique allongé dont l'une des grandes faces est pourvue, sur toute sa longueur, de rainures longitudinales parallèles en vé 80 qui sont propres à recevoir chacune les extrémités dégainées de deux fibres à abouter Fa et Fb. Les chants longitudinaux du support 8 présentent des rainures parallèles 81 qui ont une grande section en vé ou en vé épointé et qui sont destinées à recevoir deux cylindres calibrés 82 et à être enserrées par des mors d'étau de la machine de rectification. Le support 8 comporte également une ou plusieurs petites saignées transversales 83 qui sont dans le plan médian transversal du support. La saignée 83 sert d'amorce de rupture ou de sciage pour séparer le support 8 en deux semi-supports identiques 8a et 8b.

Après sciage du support 8, les fibres Fa et Fb sont rabattues dans les rainures 81 des demi-supports respectifs 8a et 8b et y sont maintenus par une colle à polymérisation rapide 84 et/ou par application au moyen de demi-plaques 84a, 84b qui sont également rainurées et obtenues à partir d'une plaque unique 84 et qui recouvrent les demi-supports. A ce stade, les extrémités des fibres dépassent légèrement les chants transversaux des demi-supports 8a et 8b correspondant à la saignée 83.

On procède ensuite à la rectification des chants 83 des demi-supports 8a et 8b conjointement à celle des extrémités des fibres optiques Fa et Fb au moyen de la machine de rectification selon l'invention.

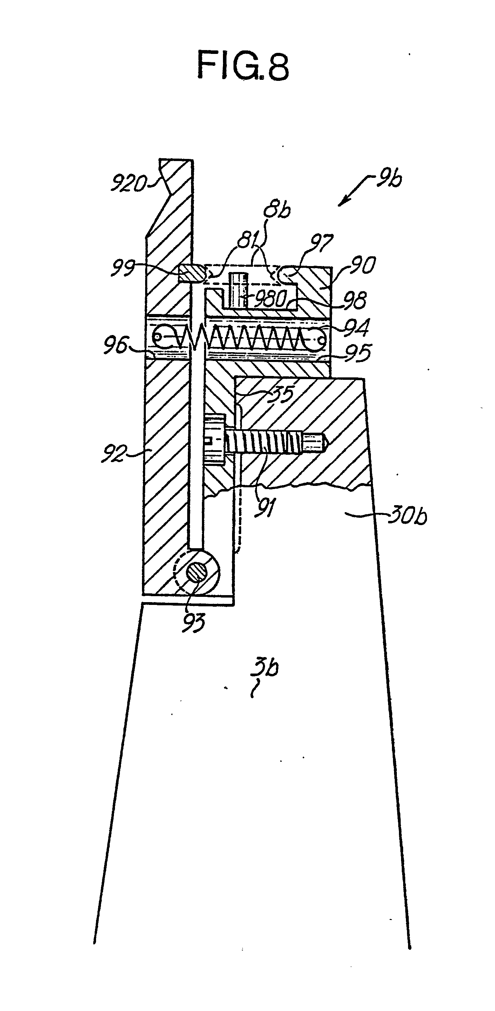

La Fig. 8 montre en détail, à titre d'exemple, l'extrémité 30b d'un porte-pièce tel que 3b qui est adapté à recevoir l'un des demi-supports tels que 8b. Au sommet de l'extrémité 30b est ménagée une entaille ayant un grand côté vertical 35 qui est pratiquement parallèle au plan Y'Y-Z'Z lorsque le demi-support est en cours de rectification, comme montré à la Fig. 3. L'entaille est tournée à l'opposé de la meule 2. L'un, 90, des mors d'un étau 9b a une section verticale en équerre, laquelle équerre est appliquée contre le grand côté 35 de l'entaille et contre le dessus horizontal de l'extrémité 30b, au moyen d'une vis 91 vissée dans un trou taraudé horizontale de l'extrémité 30b. L'autre mors 92 de l'étau 9b est parallélépipédique et est pivotable autour d'un axe d'articulation horizontal 93 qui est parallèle à l'axe longitudinal Z'Z et qui est fixé à la partie inférieure de l'autre mors 90 devant le coin de l'entaille de l'extrémité 30b. L'étau 9b est muni de moyens pour limiter l'effort de serrage, tels qu'un ressort hélicoïdal de traction 94, qui peut être encastré dans un mors et poussé la prise de celui-ci vers celle de l'autre ou, comme illustré, qui peut être ancré dans deux alésages 95, 96 des mors 90, 92 et qui rappelle le mors 92 contre le mors 90. Le retrait du demi-support 8b de l'étau 9b est effectué par la prise de l'extrémité supérieure du mors 92 dans laquelle est pratiquée une encoche de préhension 920, et par le pivotement du mors 92 autour de l'axe d'articulation 93 à l'encontre de l'effort de traction exercé par le ressort 94.

Les prises des mors, telles que la prise 97 du mors 90 illustré, peuvent être toutes deux en forme de demi-cylindres calibrés qui ont un même diamètre que les cylindres calibrés 82 (Fig. 7). Les extrémités des fibres Fb et le chant de coupe de chaque demi-support 8b seront ainsi coplanaires et perpendiculaires à l'axe longitudinal du demi-support après rectification. Ces dispositions géométriques sont assurées notamment par l'emprise des rainures 81 par les prises semi-cylindriques des mors 90, 92 ayant une fonction analogue aux cylindres de positionnement 82. La prise 97 du mors 90 fixé à l'extrémité 30b surplombe une petite entaille 98 au-dessus de laquelle les rainures en vé 81 du demi-support 8b sont emprisonnées par les prises semi-cylindriques des mors.

Cependant, comme illustré à la Fig. 8, la prise semi-cylindrique 99 du mors pivotable 92 peut être un tampon semi-cylindrique en élastomère encastré dans le mors 92 afin de répartir la pression de serrage et d'amortir, conjointement au ressort 94, les efforts de poussée dus au travail de la meule lors de l'opération de rectification.

Après emprise des demi-supports 8a et 8b dans les étaux respectifs 9a et 9b des extrémités 30a et 30b de manière que les chants de sciage et les extrémités des fibres optiques Fa et Fb dépassent les faces des extrémités 30a et 30b en regard de la face frontale de la meule 2, les chants 83 des demi-supports 8a et 8b sont alignés dans un plan parallèle à la face frontale de la meule au moyen de cales 980. La profondeur de passe de la meule est réglée par les moyens de réglage 6 (Fig. 5). La rectification est réalisée par le rapprochement des extrémités 30a et 30b des porte-pièces.

Diverses formes de meule peuvent être utilisées, comme montré aux Fig. 9A à 9C. La meule 2 est un disque diamanté du type boisseau droit (Fig. 9A) ou, de préférence, du type boisseau à simple biseau conique (Fig. 9B) ou à double biseau conique (Fig. 9C). Les meules diamantées à biseau conique (Fig. 9B et 9C) permettent avantageusement de débuter l'opération d'usinage par un tronçonnage au moins des extrémités des fibres optiques Fa, Fb dépassant les chants de sciage des demi-supports 8a, 8b. D'autre part, la structure de la meule, c'est-à-dire le coefficient d'espacement de ses grains abrasifs ou la concentration de ceux-ci, et sa dureté, c'est-à-dire le grade ou force de cohésion retenant les grains abrasifs, peuvent être échelonnés sur plusieurs plages concentriques de la face frontale travaillante de la meule. L'échelonnement des plages est tel que, à partir de la périphérie de la meule, les structures des plages d'abrasifs sont de plus en plus fermées ou serrées, les grosseurs de leurs grains abrasifs décroissent et leurs duretés sont de plus en plus élevées. Un tel échelonnement des abrasifs réalise en un seul passage ou rapprochement des extrémités 30a et 30b des porte-pièces, l'ébauche et la finition à travers des phases intermédiaires de rectification des chants de coupe des demi-supports 8a et 8b et des extrémités des fibres optiques Fa et Fb.

Après l'opération de rectification des demi-supports 8a et 8b et des fibres puis, retour de ceux-ci à leurs positions initiales simultanément au retrait de la meule 2, les chants rectifiés des demi-supports sont aboutés et alignés deux à deux. A ces fins, ils sont enduits d'un agent d'adaptation d'indice qui a un indice de réfraction correspondant à celui du cœur des fibres optiques, afin de réduire les pertes dues aux réflexions aux extrémités des fibres.

Puis les extrémités des fibres Fa et Fb des deux demi-supports 8a et 8b sont alignées par l'application des deux cylindres d'alignement calibrés 82 dans les rainures longitudinales en vé 81, comme montré aux Fig. 6 et 7. Cette application est exercée par au moins deux attaches flexibles ou clips 85a et 85b en forme de fer à cheval à anse plate ou curviligne. Les deux extrémités coudées en S 86 d'un clip 85 enserrent les périphéries opposées des cylindres 82. Comme montré à la Fig. 6, les anses 87 de ces attaches peuvent être au contact des parois internes du boîtier 88 du dispositif de raccordement afin d'amortir toutes vibrations notamment radiales sur la jonction des fibres optiques aussi bien lors du raccordement et la pose des câbles en chantier qu'après ceux-ci.

Au lieu d'attaches en simple fer à cheval, les attaches peuvent être des anneaux à double fer à cheval dont les parties symétriques par rapport au plan horizontal médian des demi-supports sont analogues à l'attache montrée à la Fig. 7.

On notera également que les demi-supports plats 8a et 8b peuvent être des demi-supports cylindriques ayant des rainures d'alignement en vé, telles que 81, diamétralement opposées et des petites rainures 80 équiréparties circulairement au-dessus et en dessous des rainures d'alignement. Dans ce cas, si des demi-plaques de recouvrement telles que 84a, 84b sont utilisées, elles sont constituées par deux demi-coquilles semi-cylindriques. Ces dernières peuvent être remplacées par une couche de colle à polymérisation rapide, équivalente à la couche 84 ayant une épaisseur sensiblement égale à celles des demi-plaques 84a et 84b.

## Revendications

1. Machine de rectification plane frontale comprenant une meule (2), une broche porte-meule (20) déplaçable parallèlement à son axe (Z'Z), des moyens (21) pour entraîner en rotation la broche, un porte-pièce (3a) et des moyens (40 à 47) pour entraîner en rotation le porte-pièce (3a) autour d'un axe parallèle à celui (Z'Z) de la broche porte-meule (20) et dans un secteur circulaire aux extrémités duquel des pièces à rectifier (8a) supportées par le porte-pièce (3a) sont respectivement devant et par côté de la face frontale travaillante de la meule (2), caractérisée en ce qu'elle comprend des moyens (50 à 52) pour entraîner en translation la broche porte-meule (20) parallèlement à son axe (Z'Z) afin que la broche porte-meule (20) soit translatée en retrait du secteur circulaire suivi par les pièces rectifiées (8a) simultanément à la rotation du porte-pièce (3a) du devant vers le côté de la face travaillante de la meule (2) où sont retirées les pièces rectifiées (8a).

2. Machine conforme à la revendication 1, caractérisée en ce que la vitesse de rotation du porte-pièce (3a) suivant le sens de rotation du côté vers le devant de la face frontale travaillante de la meule (2) pour lequel les pièces (8a) sont rectifiées par la meule (2), est plus petite que celle du porte-pièce (3a) suivant le sens de rotation opposé du devant vers le côté de la face frontale travaillante de la meule (2) pour lequel les pièces rectifiées (8a) ne sont pas au contact de la meule (2).

3. Machine conforme à la revendication 1 ou 2, caractérisée en ce que les moyens d'entraînement en rotation du porte-pièce comprennent un organe (40a) ayant une première extrémité (32a) fixée transversalement à l'arbre de rotation (31a) du porte-pièce (3a), un coulisseau (42) ayant un côté (42a) incliné par rapport audit arbre de rotation (31a), des moyens (410) pour rappeler la seconde extrémité (41a) dudit organe (40a) contre ledit côté incliné (42a) du coulisseau, et des moyens (43 à 47) pour entraîner en translation le coulisseau (42) parallèlement audit arbre de rotation (31a).

4. Machine conforme à la revendication 3, caractérisée en ce que ladite seconde extrémité de l'organe transversal (40a) est un galet (41a).

5. Machine conforme à la revendication 3 ou 4, caractérisée en ce que les moyens d'entraînement en translation (50 à 52) de la broche porte-meule (20) translatent simultanément ledit coulisseau (42) et ladite broche porte-meule (20) suivant une même direction ou des directions opposées (52, Fig. 1).

6. Machine conforme à la revendication 5, caractérisée en ce que la course du coulisseau (42) est plus longue que celle de la broche porte-meule (20).

7. Machine conforme à la revendication 5 ou 6, caractérisée en ce que les moyens d'entraînement en translation simultanée de la broche porte-meule (20) et du coulisseau (42) comprennent un vérin (50) actionnant un levier (52) à point d'articulation fixe (53) poussant ou articulé sur la broche porte-meule (20) et poussant ou articulé sur le coulisseau (42).

8. Machine conforme à la revendication 3 ou 4, caractérisée en ce que les moyens d'entraînement en translation (43 à 47) du coulisseau (42) sont alternatifs.

9. Machine conforme à l'une des revendications 3 à 7, caractérisée en ce que les moyens d'entraînement en translation (43 à 47) du coulisseau (42) suivant la direction correspondant au sens de rotation du porte-pièce (3a) du côté vers le devant de la face frontale travaillante de la meule (2) comprennent une vis sans fin (44), des moyens (47) pour entraîner en rotation la vis sans fin, et un écrou (45) relié au coulisseau et engrénant avec la vis sans fin.

10. Machine conforme à la revendication 9, caractérisée en ce qu'elle comprend des moyens (46) pour entraîner en translation ledit écrou (45) en retrait de la vis sans fin (44) dès la translation de la broche porte-meule (20) en retrait de la rotation circulaire des pièces rectifiées (8a) du devant vers le côté de la face frontale travaillante de la meule (2).

11. Machine conforme à la revendication 10, caractérisée en ce que les moyens d'entraînement en translation dudit écrou (45) sont un électro-aimant (46) ou un vérin.

12. Machine conforme à l'une des revendications 1 à 11, caractérisée en ce que la broche porte-meule (20) coulisse parallèlement à son axe (Z'Z) dans une glissière (17) et est rappelée élastiquement (ressort 201) en direction du porte-pièce (3a) et en butée contre une extrémité (170) de ladite glissière et en ce que sont prévus des moyens (6) pour régler la profondeur de passe de rectification en positionnant la broche (20) dans ladite glissière (17).

13. Machine conforme à la revendication 12, caractérisée en ce que les moyens de réglage de la profondeur de passe (6) comprennent des moyens (65) munis d'un vernier (66) pour translater une cale (62) dont un côté (61) est incliné par rapport à l'axe (Z'Z) de la glissière (17), entre la partie coulissante (200) de la broche et l'extrémité (170) formant butée de la glissière (17).

14. Machine conforme à l'une des revendications 1 à 13, caractérisée en ce que son bâti (1) renferme des moyens de circulation à air forcé (74, 75, 76).

15. Machine conforme à l'une des revendications 1 à 14, caractérisée en ce qu'elle comprend au moins un second porte-pièce (3b) qui est entraîné par des moyens d'entraînement à rotation alternative (40b à 47) analogues à ceux (40a à 47) du premier porte-pièce (3a) déjà cité.

16. Machine conforme à la revendication 15, caractérisée en ce que les deux porte-pièces (3a, 3b) sont sensiblement diamétralement opposés par rapport à la meule (2) et sont animés suivant des mouvements de rotation opposés.

17. Machine conforme aux revendications 3 et 16, caractérisée en ce que ledit coulisseau (42) comporte un second côté (42b) qui est symétrique du premier côté incliné déjà cité (42a) par rapport à l'axe de coulissement longitudinal du coulisseau et en ce que les moyens de rappel (43) attirent les secondes extrémités (41a, 41b) des organes transversaux (40a, 40b) aux arbres de rotation (31a, 31b) des porte-pièces (3a, 3b) contre les côtés inclinés respectifs (42a, 42b) du coulisseau.

18. Machine conforme à l'une des revendications 1 à 17 pour rectifier des extrémités de fibres optiques (Fa) affleurant un chant transversal (83) d'un support multifibre (8a) en vue du raccordement de câbles à fibres optiques (Ca ; Cb), caractérisée en ce que sur le porte-pièce (3a) est fixé un étau (9a) dont les prises (97, 99) des mors (90, 92) sont semi-cylindriques et sont propres à emprisonner deux rainures longitudinales parallèles (81) pratiquées dans le support (8a), lesdites rainures servant à recevoir des cylindres (82) pour aligner deux supports multifibres identiques (8a, 8b) et abouter leurs fibres (Fa, Fb).

19. Machine conforme à la revendication 18, caractérisée en ce que l'étau (9) est muni de moyens de limitation de l'effort de serrage des mors (94).

20. Machine conforme à la revendication 18 ou 19, caractérisée en ce que l'un (92) des mors est pivotable par rapport à l'autre (90) et rappelé vers ce dernier par ressort (94).

21. Machine conforme à l'une des revendications 18 à 20, caractérisée en ce que l'une (99) des prises de mors (90, 92) est un tampon élastique.

22. Machine conforme à l'une des revendications 18 à 21, caractérisée en ce que la meule (2) est du type à biseau conique (Fig. 9B ou 9C).

23. Machine conforme à l'une des revendications 18 à 22, caractérisée en ce que la face frontale de la meule (2) comporte des plages circulaires concentriques ayant des structures et/ou grades et/ou grosseurs de grain respectivement différents.

**Claims**

1. Front surface grinding machine comprising an abrasive wheel (2), a wheelhead spindle (20) movable parallel to its axis (Z'Z), means (21) for rotatably driving the spindle, a workpiece holder (3a) and means (40 to 47) for rotatably driving the workpiece holder (3a) about an axis parallel to that (Z'Z) of the wheelhead spindle (20) and within a circular sector having two end points where workpieces (8a) carried the holder (3a) are respectively in front and to the side of the front working surface of the wheel (2), characterized in that comprising means (50 to 52) for translationally driving the wheelhead spindle (20) parallel to its axis (Z'Z) whereby the wheelhead spindle (20) be pulled back from the circular sector followed by the ground workpieces (8a) simultaneously with the rotation of the workpiece holder (3a) from the front to the side of the abrasive wheel (2) working surface where the ground workpieces (8a) are removed.

2. Machine according to claim 1, characterized in that the rotation speed of the workpiece holder (3a) in the rotation direction from the side to the front of the abrasive wheel (2) front working surface for which the workpieces (8a) are ground by the abrasive wheel (2), is slower than that of the workpiece holder (3a) in the opposite rotation direction from the front to the side of the abrasive wheel front working surface for which the ground workpieces (8a) are not in contact with the abrasive wheel (2).

3. Machine according to claim 1 or 2, characterized in that the workpiece holder rotatably-driving means comprise a member (40a) having a first end (32a) fixed transversely to the rotation shaft (31a) of the workpiece holder (3a), a slide (42) having a side (42a) sloped with respect to said rotation shaft (31a), means (410) for drawing the second end (41a) of said member (40a) against said sloped side (42a) of the slide, and means (43 to 47) for translationally driving the slide (42) parallel to said rotation shaft (31a).

4. Machine according to claim 3, characterized in that said second end of the transversal member (4a) is a roller (41a).

5. Machine according to claim 3 or 4, characterized in that the wheelhead spindle (20) translationally-driving means simultaneously translate said slide (42) and said wheelhead spindle (20) in a same direction or opposite directions (52, Fig. 1).

6. Machine according to claim 5, characterized in that the path followed by the slide (42) is longer than that of the wheelhead spindle (20).

7. Machine according to claim 5 or 6, characterized in that the wheelhead spindle (20) and slide (42) simultaneous translationally-driving means comprise a jack (50) acting on a lever (52) having a stationary pivotable point (53), pushing or being articulated in the wheelhead spindle (20) and the slide (42).

8. Machine according to claim 3 or 4, characterized in that the slide (42) translationally-driving means (43 to 47) impart reciprocal motion.

9. Machine according to one of claims 3 to 7, characterized in that the means (43 to 47) for translationally driving the slide (42) in the direction corresponding to the workpiece holder (3a) rotation direction from the slide to the front of the abrasive wheel (2) front working surface comprise an endless screw (44), means (47) for driving the endless screw in rotation, and a nut (45) linked to the slide and running on the endless screw.

10. Machine according to claim 9, characterized in that it comprises means (46) for driving said nut (45) in translation off the endless screw (44) upon translational motion of the wheelhead spindle (20) away from the circular rotation of the ground workpieces (8a) from the front to the side of the abrasive wheel (2) front working surface.

11. Machine according to claim 10, characterized in that the nut (45) translationally-driving means are an electromagnet (46) or a jack.

12. Machine according to one claims 1 to 11, characterized in that the wheelhead spindle (20) slides parallel to its axis (Z'Z) in a guide (17), and is pushed with elasticity (spring 201) in the direction of the workpiece holder (3a) and against an end (170) of said guide, and in that are provided means (6) for adjusting the grinding run depth by positioning the wheelhead spindle (20) in said guide (17).

13. Machine according to claim 12, characterized in that the grinding run depth adjusting means (6) comprise means (65) equipped with a vernier (66) for translationally moving a wedge (62) one side (61) of which is inclined to the axis (Z'Z) of the guide (17), between the sliding portion (200) of spindle and the end (170) of the guide (17).

14. Machine according to one of claims 1 to 13, characterized in that its frame (1) incorporates forced air flow means (74, 75, 76).

15. Machine according to one of claims 1 to 14, characterized in that it comprises at least a second workpiece holder (3b) that is driven by reciprocating rotational motion driving means (40b to 47) analogous to those of the aforesaid workpiece holder (3a).

16. Machine according to claim 15, characterized in that the two workpiece holders (3a, 3b) are substantially diametrically opposed with respect to the abrasive wheel (2) and are excited in opposite rotational movements.

17. Machine according to claims 3 and 16, characterized in that said slide (42) have a second side (42b) that is symmetrical to the aforesaid first sloped side (42a) with respect to the longitudinal sliding axis of the slide, and in that the drawing means (43) draw the second ends (41a, 41b) of the members (40a, 40b) transversal to the rotation shaftes (31a, 31b) of the workpiece holders (3a, 3b) against the respective sloped slides (42a, 42b) of the slide.

18. Machine according to one of claims 1 to 17, for grinding ends of optical fibers (Fa) flush with a transverse edge (83) of a multifiber holder (8a) with a view to connecting optical fiber cables (Ca ; Cb), characterized in that on the workpiece holder (3a) is fixed a vice (90) whose the teeth (97, 99) of jaw (97, 99) are semi-cylindrical and intented for enveloping two parallel and longitudinal grooves (81) in the multifiber holder (8a), said grooves serving in taking cylinders (82) for alining two identical multifiber holders (8a, 8b) and connecting their fibres end to end.

19. Machine according to claim 18, characterized in that the vice (19) is equipped with means (94) for limiting the jaw (94) tightening loads.

20. Machine according to claim 18 or 19, characterized in that one (92) of the jaws is pivotable with respect to the other (90) and drawn back thereto by a spring (94).

21. Machine according to one of claims 18 to 20, characterized in that one (99) of the jaw (90, 92) teeth is an elastic buffer.

22. Machine according to one of claims 18 to 21, characterized in that the abrasive wheel (2) is of the chamber type (Fig. 9B or 9C).

23. Machine according to one of claims 1 to 21, characterized in that the front surface of the abrasive wheel (2) comprises concentric circular portions having structures and/or grades and/or grain sizes different respectively.

## Patentansprüche

1. Stirnflächenschleifmaschine enthaltend eine Schleifscheibe (2), eine parallel zu ihrer Achse (Z, Z') verschiebbare Schleifscheibenträgerspindel (20). Einrichtungen (21) für den Rotationsantrieb der Spindel, eine Trageinrichtung (3a) und Einrichtungen (40 bis 47) für den Rotationsantrieb der Trageinrichtungen (3a) um eine zur Achse (Z, Z') der Schleifscheibenträgerspindel (20) parallelen Achse sowie in einem Kreissektor, in welchem die Enden der zu schleifenden, von der Trageinrichtung (3a) gehaltenen Stücke (8a) jeweils vor und seitlich der frontalen Arbeitsseite der Schleifscheibe (2) liegen, dadurch gekennzeichnet, daß sie Einrichtungen (50 bis 52) für einen Translationsantrieb der Schleifscheibenträgerspindel (20) parallel auf ihrer Achse (Z, Z') enthält, um die Schleifscheibenträgerspindel (20) von dem Kreissektor, den zu schleifenden Stücken (8a) folgend, gleichzeitig mit der Drehung der Trageinrichtung (3a) nach vorn gegen die Arbeitsseite der Schleifscheibe (2) zurückzuschieben, wohin die zu schleifenden Stücke (8a) zurückgezogen werden.

2. Maschine nach Anspruch 1, dadurch gekennzeichnet, daß die Rotationsgeschwindigkeit der Trageinrichtung (3a) bei der Rotation gegen die Vorderseite der Arbeitsseite der Schleifscheibe (2), an welcher die Stücke (8a) durch die Schleifscheibe (2), an welcher die Stücke (8a) durch die Schleifscheibe (2) geschliffen werden, sehr viel kleiner ist als diejenige der Trageinrichtung (3a) bei der Drehung entgegen der vorderen Arbeitsseite der Schleifscheibe, wobei die zu schleifenden Stücke (8a) nicht in Kontakt mit der Schleifscheibe sind.

3. Maschine nach Anspruch 1 oder 2, dadurch gekennzeichnet, daß die Drehvorrichtung für die Trageinrichtung ein Organ (40a) enthält, das ein erstes Endstück (32a), das transversal an der Rotationsachse (31a) der Trageinrichtung (3a) befestigt ist, aufweist, eine Führungsbacke (42), deren eine Seite (42a) gegenüber der Rotationsachse (31a) geneigt ist, Einrichtungen (410) zum Zurückführen des zweiten Endstücks (41a) des Organs (40a) gegen die geneigte Seite (42a) der Führungsbacke, und Einrichtungen (43 bis 47) zum Bewegen der Führungsbacke (42) in paralleler Richtung zur Rotationsachse (31a).

4. Maschine nach Anspruch 3, dadurch gekennzeichnet, daß das zweite Endstück des transversalen Organs (40a) eine Schwenkrolle (41a) ist.

5. Maschine nach Anspruch 3 oder 4, dadurch gekennzeichnet, daß die Einrichtung (50 bis 52) zum translatorischen Bewegen der Schleifscheibenträgerspindel (20) gleichzeitig die Führungsbacke (42) und die Schleifscheibenträgerspindel (20) in eine gleiche oder entgegengesetzte Richtung (52, Fig. 1) bewegen.

6. Maschine nach Anspruch 5, dadurch gekennzeichnet, daß der Bewegungsweg der Führungsbacke (42) sehr viel größer ist als der der Schleifscheibenträgerspindel (20).

7. Maschine nach Anspruch 5 oder 6, dadurch gekennzeichnet, daß die Einrichtung zum gleichzeitigen translatorischen Bewegen der Schleifscheibenträgerspindel (20) und der Führungsbacke (42) eine Schraubwinde (50) enthält, die einen Hebel (52) an einem fixen Gelenkpunkt (53) betätigt, der auf die Schleifscheibenträgerspindel (20) und die Führungsbacke (42) drückt oder gelenkig angebracht ist.

8. Maschine nach Anspruch 3 oder 4, dadurch gekennzeichnet, daß die Einrichtungen (43 bis 47) zum Bewegen der Führungsbacke (42) alternativ sind.

9. Maschine nach einem der Ansprüche 3 bis 7, dadurch gekennzeichnet, daß die Einrichtungen (43 bis 47) zum Bewegen der Führungsbacke (42) in die Richtung der Rotation der Trageinrichtung (3a) zur Vorderseite der Arbeitsfläche der Schleifscheibe (2) eine Förderschnecke (44) und eine Schraube (45) enthalten, die auf der Führungsbacke (42) befestigt ist und in die Förderschnecke eingreift.

10. Maschine nach Anspruch 9, dadurch gekennzeichnet, daß sie Einrichtungen (46) enthält zum translatorischen Bewegen der Schraube (45) gegenüber der Förderschnecke (44) zur geradlinigen Bewegung der Schleifscheibenträgerspindel (20) gegenüber der Rotation der zu schleifenden Stücke (8a) an die Vorderseite der Arbeitsseite der Schleifscheibe (2).

11. Maschine nach Anspruch 10, dadurch gekennzeichnet, daß die Einrichtung zum geradlinigen Bewegen der Schraube (45) ein Elektromagnet (46) oder eine Schraubwinde ist.

12. Maschine nach einem der Ansprüche 1 bis 11, dadurch gekennzeichnet, daß die Schleifscheibenträgerspindel (20) parallel auf ihrer Achse (Z, Z') in Richtung der Trageinrichtung (3a) und im Anschlag gegen ein Endstück (170) einer Führung (17) gleitet und elastisch zurückschnappt (Feder 201), und daß Einrichtungen (6) zur Regelung der Tiefe des Schleifgangs und zur Positionierung der Schleifscheibenträgerspindel (20) an der Führung (17) vorgesehen sind.

13. Maschine nach Anspruch 12, dadurch gekennzeichnet, daß die Einrichtungen zuren zur Regelung der Tiefe des Schleifgangs (6) Einrichtungen (65) enthalten, die an einem Nonius (66) befestigt sind, um einen Keil (62), dessen eine Seite (61) gegen die Achse (Z, Z') der Führung geneigt ist, zwischem dem Gleitteil (200) der Spindel und dem Endstück (170), das den Anschlag der Führung (17) bildet, geradlinig zu bewegen.

14. Maschine nach einem der Ansprüche 1 bis 13, dadurch gekennzeichnet, daß das Gehäuse (1) Einrichtungen zum Umwälzen von Gebläseluft (74, 75, 76) enthält.

15. Maschine nach einem der Ansprüche 1 bis 14, dadurch gekennzeichnet, daß sie mindestens eine zweite Trageinrichtung (3b) enthält, die durch Einrichtungen zum Einleiten einer entgegengesetzten Drehbewegung (40b bis 47) angetrieben wird, die analog den Einrichtungen (40 bis 47) der ersten Trageinrichtung (3a) sind.

16. Maschine nach Anspruch 15, dadurch gekennzeichnet, daß die beiden Trageinrichtungen (3a, 3b) genau gegenüber der Schleifscheibe (2) angeordnet sind und in entgegengesetzer Drehrichtung angetrieben werden.

17. Maschine nach den Ansprüchen 3 bis 16, dadurch gekennzeichnet, daß die Führungsbacke (42) ein zweites Seitenteil (42b) enthält, das bezüglich der longitudinalen Führungsachse symmetrisch zu der ersten geneigten Seite (42a) ist, und daß die Einrichtungen zum Zurückziehen (43) die zwei Endstücke (41a, 41b) der transversalen Organe (40a, 40b) um die Drehachsen (31a, 31b) der Tragstücke (3a, 3b) gegen die jeweiligen geneigten Seiten (42a, 42b) der Führungsbacke bewegen.

18. Maschine nach einem der Ansprüche 1 bis 17 zum Schleifen der Enden der optischen Fasern (Fa), bei der eine transversale Seite (83) eines Multifaserträgers (8a) zum Anschließen der Kabel der optischen Fasern (Ca ; Cb) bündig gemacht wird, dadurch gekennzeichnet, daß eine Zwinge (9a) auf der Trageinrichtung (3a) befestigt wird, deren Bolzen (97, 99) der Spannbacken (90, 92) halbzylindrisch sind und in zwei longitudinale parallele Nuten eingreifen können, die auf der Trageinrichtung (8a) angebracht sind, wobei die Nuten zur Aufnahme der Zylinder (82) zum Ausrichten der beiden identischen Multifaserträger (8a, 8b) und zum Zusammenfügen ihrer Fasern (Fa, Fb) dienen.

19. Maschine nach Anspruch 18, dadurch gekennzeichnet, daß die Zwinge (9) mit Einrichtungen befestigt ist, die die Spannung des Drucks der Backen (94) begrenzen.

20. Maschine nach Anspruch 18 oder 19, dadurch gekennzeichnet, daß die eine der Backen (92) in Bezug auf die andere (90) schwenkbar ist und durch eine Feder (94) gegen die andere gedrückt wird.

21. Maschine nach einem der Ansprüche 18 bis 20, dadurch gekennzeichnet, daß der eine der Mitnehmer (99) der Backen (90, 92) ein elastischer Stöpsel ist.

22. Maschine nach einem der Ansprüche 18 bis 21, dadurch gekennzeichnet, daß die Schleifscheibe (2) von konischer Bauart (Fig. 9B oder 9C) ist.

23. Maschine nach einem der Ansprüche 18 bis 22, dadurch gekennzeichnet, daß die Vorderseite der Schleifscheibe (2) kreisförmig konzentrische Ränder enthält, die jeweils verschiedene Körnungsstrukturen und/oder -grade und/oder -größen aufweisen.

0 082 748

# FIG.1

# FIG.4

FIG.2

7

24

2

20~

23

22

3a

40a

50

52

41a

42

10

16

44

47

FIG.9

A          B          C

# 0 082 748

## FIG.3

## FIG.5

3

# FIG.6

# FIG.7

0 082 748

# FIG.8